# EUROPEAN PATENT SPECIFICATION

(11) **EP 3 179 848 B1**
(45) Date of publication and mention of the grant of the patent: **17.11.2021**
(21) Application number: 15759649.5
(22) Date of filing: 06.08.2015
(51) Int. Cl.: A01K 13/00, A61D 11/00

(54) **APPARATUS FOR TREATING ANIMALS**
VORRICHTUNG ZUR BEHANDLUNG VON TIEREN
APPAREIL DE TRAITEMENT POUR ANIMAUX

(30) Priority: 11.08.2014 GB 201414192
(43) Date of publication of application: 21.06.2017
(73) Proprietor: Oran Oak Engineering Limited, Omagh, County Tyrone BT79 0SH (GB)
(72) Inventor: KELLY, Mark, Omagh County Tyrone BT790SH (GB)
(74) Representative: FRKelly
(86) International application number: PCT/EP2015/068213
(87) International publication number: WO 2016/023818

(56) References cited:
- GB-A- 1 274 894
- GB-A- 1 477 836
- GB-A- 2 106 364
- GB-A- 2 335 340
- US-A- 3 942 306
- US-A- 3 949 709
- US-A- 4 057 032
- US-A- 4 505 229
- US-A1- 2006 213 432
- US-B1- 8 061 304

## Description

### FIELD OF THE INVENTION

This invention relates to an apparatus for treating animals, and in particular to an apparatus for treating animals with a treatment liquid, such as a cleansing liquid, a disinfectant, a pesticide or an insecticide. Such an apparatus is known from GB2106364A which discloses in combination the features of the preamble of claim 1.

### BACKGROUND OF THE INVENTION

It is often desirable to treat domesticated animals, in particular sheep, by drenching the animals in a treatment liquid, such as a cleansing liquid, a disinfectant, a pesticide or an insecticide, in particular for the control of parasites and disease. This is frequently achieved by dipping the animals in a tank or trough containing the treatment liquid, fully submerging the animals within the treatment liquid. However, this treatment method is hazardous to the farmer, due to the often toxic nature of the treatment liquid, and can be extremely stressful to the animals.

### SUMMARY OF THE INVENTION

According to a first aspect of the present invention there is provided an animal treatment apparatus as claimed in claim 1. Preferred embodiments of this treatment apparatus are claimed in dependent claims 2-8. It comprises a chamber defining an enclosure within which one or more animals may be housed during treatment with a treatment liquid, a plurality of spray nozzles being provided within the enclosure, said spray nozzles communicating with a reservoir containing a treatment liquid, a pump being provided for pumping said liquid from the reservoir to said spray nozzles to drench the one or more animals located within said chamber with said treatment liquid, wherein said chamber is formed from a plastic such that the walls of the chamber are formed from a liquid impermeable material for retaining said treatment liquid within the chamber.

The chamber comprises an entrance at a first end of the chamber and an exit at a second end of the chamber, opposite said entrance, such that the chamber defines a tunnel like enclosure through which the at least one animal passes between said entrance and exit. Both the entrance and the exit are provided with a respective gate or door for selectively closing the entrance or exit. Said gate or door may be mounted to be vertically slidable between open and closed positions. Preferably each door is mounted within respective guide channels, said guide channels being integrally formed in the end walls of said chamber.

A trough may be provided in a lower region of the chamber defining a bath for treating the one more animals feet. The trough may be provided with a removable cover or platform defining a portion of a walkway upon which animals may stand when inside the enclosure. Barriers may be provided on either side of the trough to constrain animals to walk through the trough.

In one embodiment said barriers and said trough may be formed from a single piece moulding formed of plastic located within the chamber.

The said chamber includes a sump within a lower region thereof for receiving treatment liquid drained from said walkway and/or from said trough, said sump comprising said treatment liquid reservoir.

Said spray nozzles communicate with said pump via conduits mounted on an inner or outer surface of the chamber. Said conduits may be located within slots or channels formed in the inner or outer surface of the chamber.

The chamber comprises a single piece moulding formed by a rotational moulding process. The chamber may comprise upper and lower parts divided by a horizontal split line.

The said pump is mounted on exterior of chamber. Said pump is mounted on a seat integrally formed on an upper surface of the chamber.

A method of manufacturing an animal treatment apparatus may comprise forming a single piece chamber from a plastic material via a rotational moulding process, wherein the chamber defines an enclosure within which one or more animals may be housed during treatment with a treatment liquid, mounting a plurality of spray nozzles within the enclosure, said spray nozzles communicating with a reservoir containing a treatment liquid, providing a pump for pumping said liquid from the reservoir to said spray nozzles to drench the one or more animals located within said chamber with said treatment liquid, in use.

The pump for pumping the treatment liquid from the reservoir to the spray nozzles is mounted on exterior of chamber for ease of access for servicing and maintenance.

### BRIEF DESCRIPTION OF THE DRAWINGS

An animal treatment apparatus in accordance with an embodiment of the present invention will now be described, by way of example only, with reference to the accompanying drawings, in which :-
Figure 1 is a perspective view of an animal treatment apparatus in accordance with a first embodiment of the present invention;
Figure 2 is a side view of the animal treatment apparatus of Figure 1;
Figure 3 is a plan view of the animal treatment apparatus of Figure 1;
Figure 4 is an end view of the animal treatment apparatus of Figure 1;
Figure 5 is a detailed perspective view of the animal treatment apparatus of Figure 1;
Figure 6 is a detailed view of one of the spray nozzles of the apparatus of Figure 1;
Figure 7 is a perspective view of an upper part of the apparatus of Figure 1;
Figure 8 is a perspective view of a walkway of the apparatus of Figure 1;
Figure 9 is a perspective view of a lower part of the apparatus of Figure 1;
Figure 10 is a part sectional perspective view of an animal treatment apparatus in accordance with a further embodiment of the present invention;
Figure 11 is a plan view of the chamber of the animal treatment apparatus of Figure 10;
Figure 12 is an end view of the chamber of Figure 11;
Figure 13 is a perspective view of the chamber of Figure 11;
Figure 14 is a side view of the chamber of Figure 11;
Figure 15 is a perspective view of the trough section of the apparatus of Figure 10;
Figure 16 is an end view of the trough section of Figure 15;
Figure 17 is a plan view of the trough section of Figure 15;
Figure 18 is a side view of the trough section of Figure 15;
Figure 19 is a perspective view of a trough support section of the apparatus of Figure 10;
Figure 20 is a plan view of the trough support section of Figure 19;
Figure 21 is a side view of the trough support section of Figure 19;
Figure 22 is an end view of the trough support section of Figure 19; and
Figure 23 is a perspective view of the apparatus of Figure 10 with the chamber removed to show the internal components of the apparatus.

### DETAILED DESCRIPTION OF THE DRAWINGS

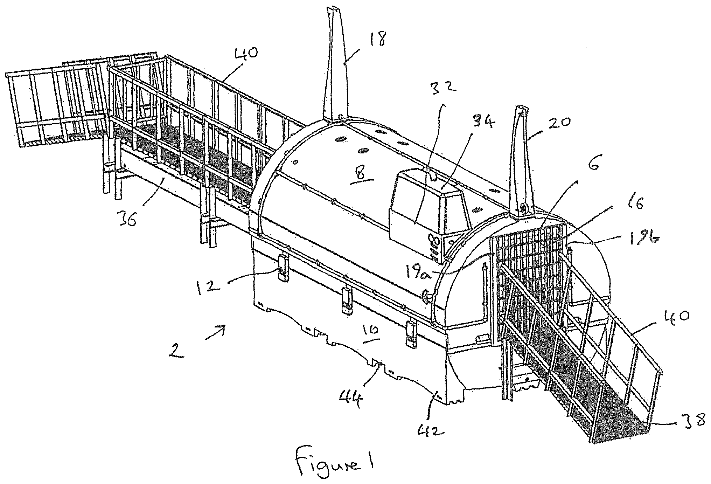

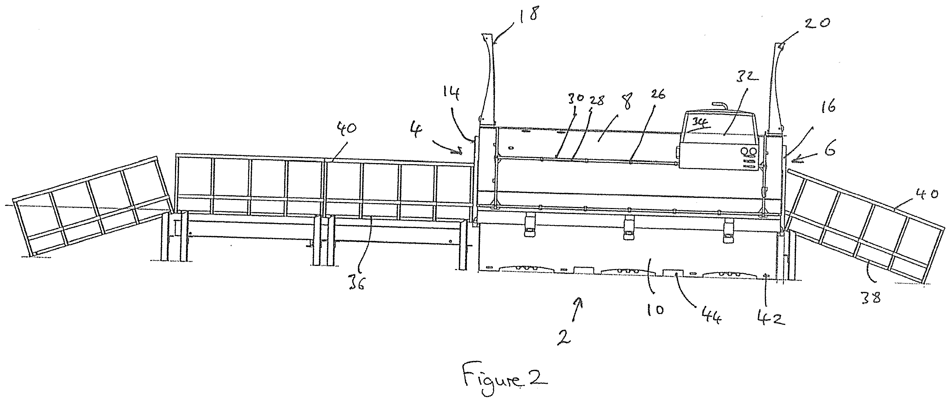

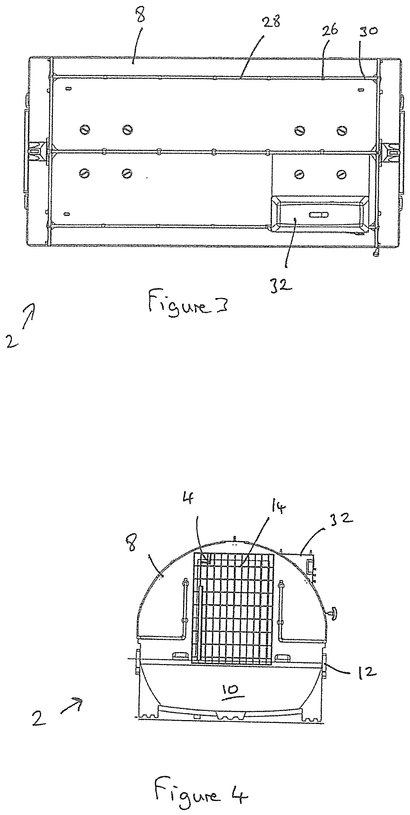

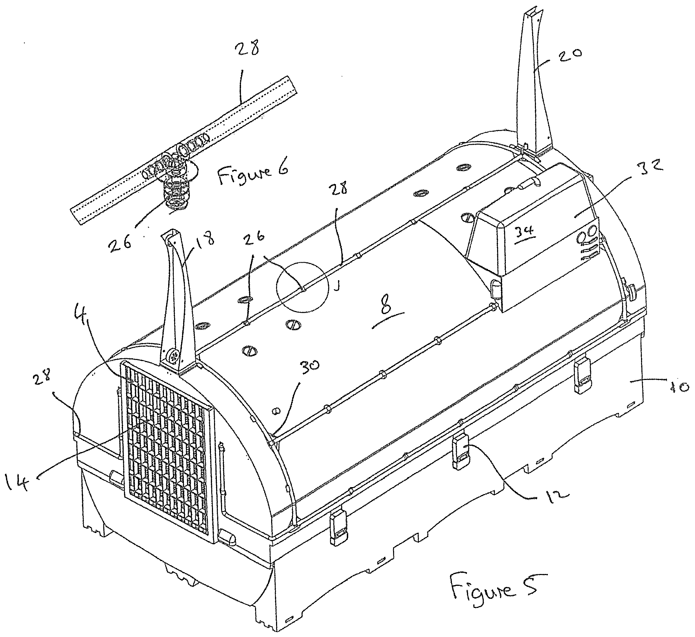

As illustrated in Figures 1 to 9, an example of an apparatus for treating animals with a treatment liquid may comprise an enclosure defined by a hollow chamber 2 formed from a plastic material preferably by a moulding process, such as injection or rotational moulding, within which animals to be treated may be held. The chamber a has an entrance opening 4 at a first end of the chamber, whereby animals may enter the chamber, and an exit opening 6 at a second end of the chamber, opposite the first end, whereby animals may leave the chamber, such that the chamber 2 defines a tunnel like enclosure through which animals to be treated may be passed while said enclosure retains a treatment liquid to be sprayed over the animals within the chamber.

The apparatus is particularly suited to the treatment of sheep, although it is envisaged that the apparatus may be equally suitable for the treatment of other animals, in particular domesticated animals, such as farm animals or pets. The size of the chamber may be varied to suit the size of animal to be treated and/or the number of animals to be treated at a time.

In an embodiment shown in Figures 1 to 9, the chamber is formed from upper and lower moulded plastic parts 8,10, which may be formed integrally as a single part component or formed in two separate parts, said parts being separable along mutually engaging joining faces arranged in a horizontal plane such that the upper part 8 can be removed from the lower part 10 of the chamber 2 to facilitate assembly and/or manufacture and for cleaning and maintenance. Releasable closures or clips 12 may be provided for securing the two parts 8,10 of the chamber 2 together. The entrance and exit openings 4,6 may be provided in respective end walls of the upper part 8 of the chamber 2.

The entrance and exit openings 8,10 are provided with vertically sliding gates 14,16 for selectively closing the entrance and exit openings 4,6 to retain animals within the chamber during treatment. In the embodiment shown in Figures 1 to 9, upright posts 18,20 extend from an upper wall of the upper part of the chamber 2 above each opening for supporting a lifting mechanism (not shown), such as a cable or rope and pulley, for raising and lowering each gate 14,16. The gates may be slidable between respective pairs of guide channels 19a,19b which may be integrally moulded with the chamber 2 or which may be mounted on respective ends of the chamber.

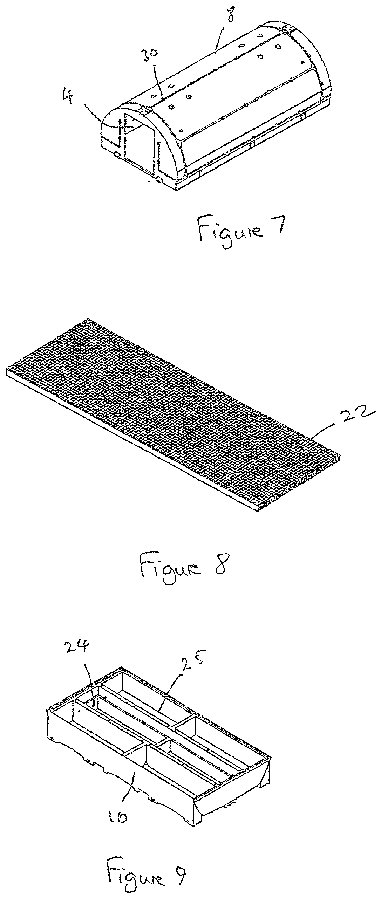

A mesh or apertured platform 22 may be located on top of the lower part 10 of the chamber 2 (see Figure 8) to define a walkway upon which animals may stand when within the chamber 2.

The lower part 10 of the chamber 2 defines a liquid collection sump 25 defining a reservoir for collecting and storing a treatment liquid. Apertures or openings in the platform 22 allow treatment liquid to drain into the sump.

All of part of the platform 22 may be removable to expose an elongate trough or bath 24 (Figure 9) through which the animals may be constrained to walk to immerse the animals feet or hooves in the treatment liquid contained therein. The trough 24 may be removable from the lower part 10 of the chamber 2 for cleaning or replacement. Barriers (not shown in Figures 1 to 9) may be provided on either side of the trough 24 to guide animals through the trough. Such barriers may be removable or may be fixedly attached to or integrally formed with the lower part 10 of the chamber 2.

A plurality of spray nozzles 26 are mounted on inner walls of the chamber, preferably within through apertures provided within the upper part 8 of the chamber 2, for spraying a treatment liquid into the enclosure defined by the chamber 2 to drench animals located therein with said treatment liquid. The nozzles 26 are mounted along liquid supply conduits 28 located in recessed channels 30 formed in the outer surface of the upper part 8 of the chamber 2 for supplying treatment liquid to the nozzles 26.

Further spray nozzles may be associated with the trough 24 for spraying a foot treatment chemical onto the animal's feet.

A pump 32 is mounted on a pump platform/pump housing 34 located on top of the upper part 8 of the chamber 2 for delivering treatment liquid to the nozzles 26 via the supply conduits 28, preferably from the liquid collection sump 25 such that the treatment liquid is recycled within the chamber. An electronic controller (not shown), preferably incorporating a timer, may be provided for controlling the operation of the pump 32. The pump 32 may also include dosing means for adding a predetermined concentration of treatment fluid to water to create said treatment liquid. In alternative embodiment (not shown) the pump may comprise a submersible pump be located within the liquid collection sump 25.

External walkways 36,38 having guard rails 40 mounted on either side thereof are provided for guiding animals to be treated into and out of the chamber 2.

Support feet 42 are integrally formed with the lower part 10 such that the chamber 2 to ensure stable placement of the chamber 2 on the ground.

Transversely extending tine receiving slots 44 may be formed in a lower surface of the lower part of the chamber to enable the chamber to be lifted between a trailer and the ground. Alternatively, the chamber 2 may be mounted on a wheeled chassis to enable it to be towed, or may be mounted on a flat bed of a truck or similar vehicle.

In use, the gate 14 of the entrance opening to the chamber 2 is raised and one or more animals are guided to walk into the chamber, onto the platform 22, or into the trough 24. If the trough 24 is being used, the cover may be removed and barriers erected on either side of the trough to guide the animals through the trough. Then the entrance gate 14 is closed and the pump is activated, preferably for a predetermined period of time under the control of the timer of the controller, to spray treatment liquid through the nozzles 26 to drench said one or more animals within the chamber. The liquid impervious walls of the chamber 2 prevent such liquid from escaping from the chamber 2, thus minimising any exposure of persons or animals outside of the chamber to the treatment liquid and avoiding wastage. The spraying of the animals with the treatment liquid via the spray nozzles is less stressful to the animals that being submerged in a treatment liquid.

Once a treatment cycle has been completed, the exit gate 16 may be raised to allow the animals to leave the chamber via the exit opening 6.

The walls of the chamber are formed from a liquid impermeable material such that the treatment liquid is retained within the chamber, reducing the risk exposure of persons to the treatment liquid.

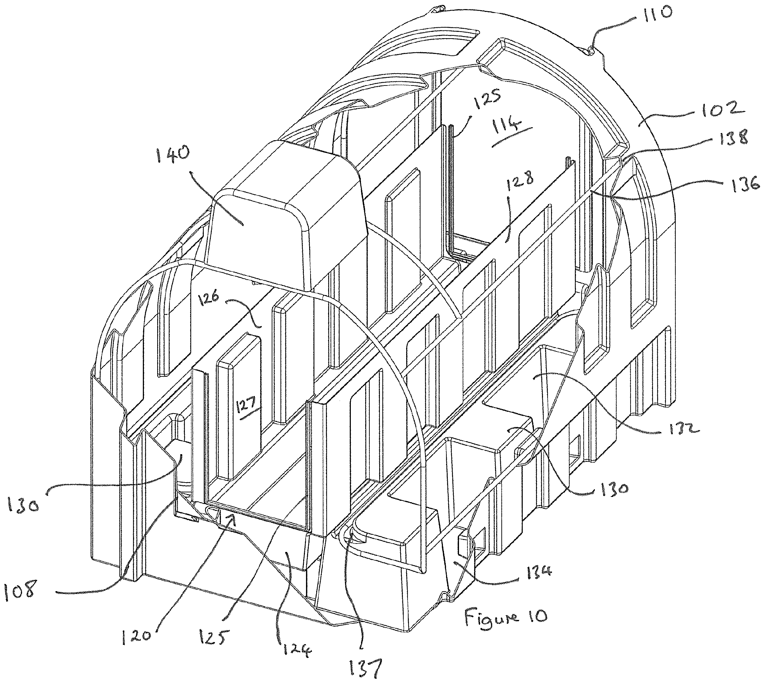

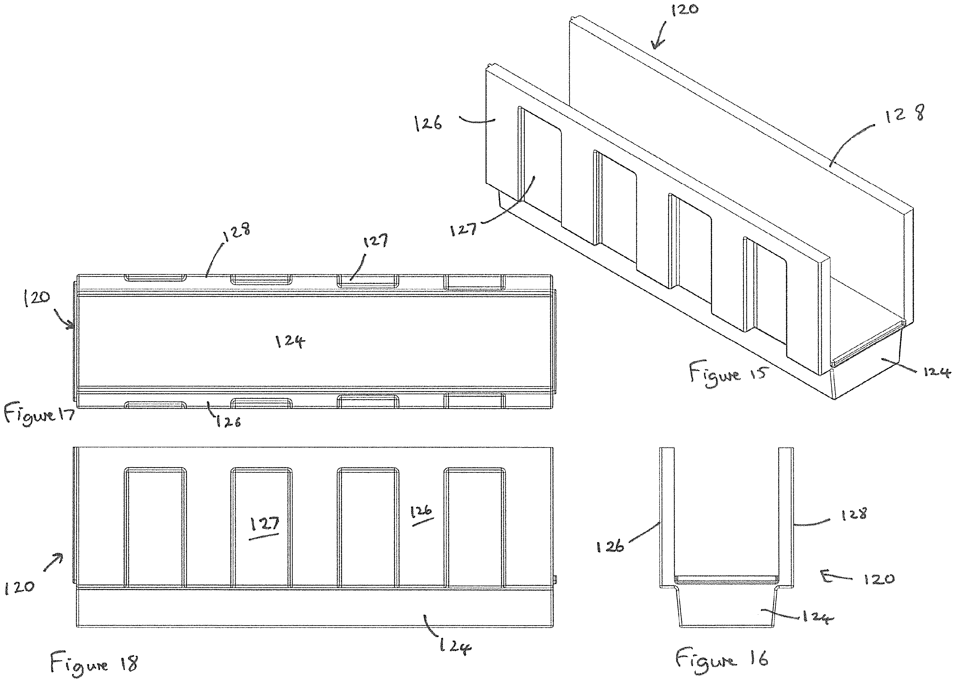

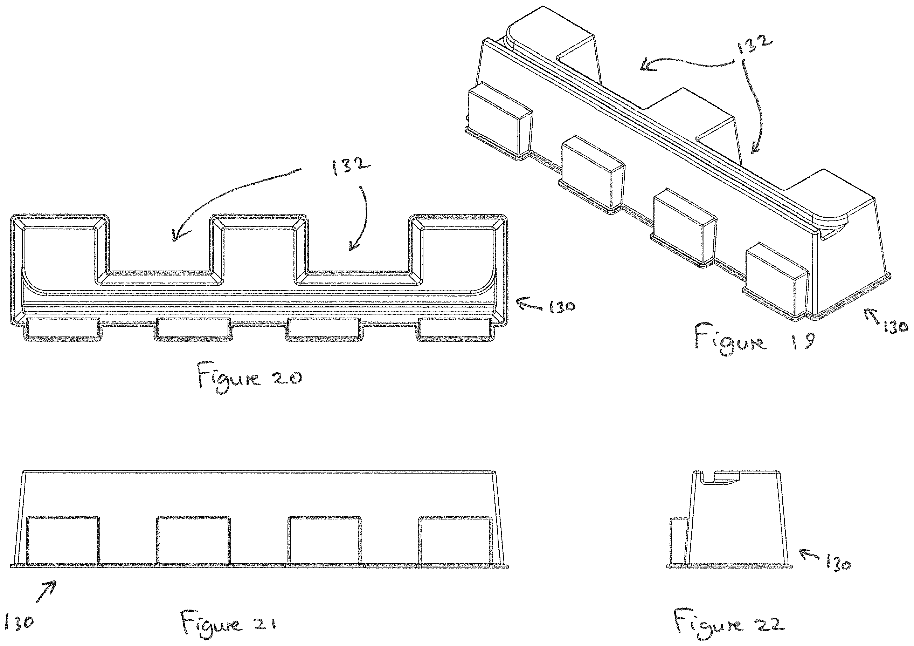

An animal treatment apparatus in accordance with the present invention is illustrated in Figures 10 to 23. This embodiment is similar to that of Figures 1 to 9, with a number of modifications or improvements.

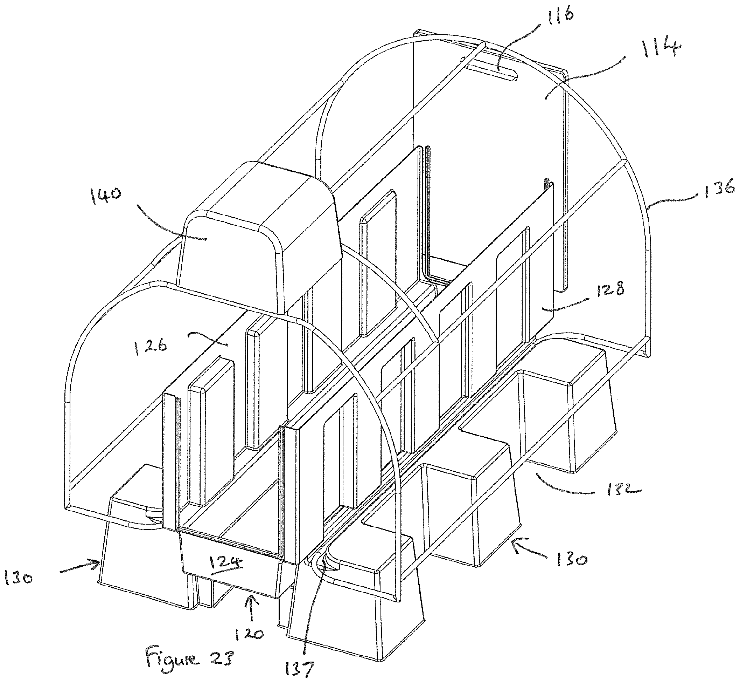

Firstly, the chamber 102 of the apparatus in accordance with the second embodiment of the invention is formed as a single piece plastic hollow body via a rotational moulding process. As with the first embodiment, entrance and exit openings 104,106 are provided at respective ends of the chamber 2, each being provided with a vertically slidable gate or closure 114 (only one shown in the drawings) slideably received in a respective guide channel 108,110, preferably integrally formed in a respective end of the chamber 102. In the embodiment shown in Figures 10 to 23, each gate 114 incorporates a handle 116 (see Figure 23) adjacent an upper end thereof to permit the gates to be manually opened and closed. Alternatively a gate lifting arrangement may be provided, similar to that of the first embodiment.

A separate trough section 120 is mounted within the chamber. The trough section 120 is preferably dimensioned to be insertable into the chamber 102 via one of the openings 104,106 to extend therebetween within the chamber. The trough section 120 defines a trough 124 through which animals may walk, where the trough may be filled with a treatment fluid to treat the animals hooves. The trough section 120 includes upstanding barriers 126,128 on either side of the trough 124, such barriers 126,128 preferably being integrally formed with the trough 124 to constrain movement of animals through the chamber 102 and to prevent the animals from avoiding walking through the trough 124. The trough section 120 may be formed from plastic and may be injection moulded or formed by any suitable moulding process. Reinforcing corrugations or formations 127 may be formed in the surface of the barriers 126,128. The ends of the barriers 126,128 may include seals 125 adapted to form a seal against the ends walls of the chamber 102.

An optional steel mesh platform (not shown) may be provided to be located over the trough 124 to define a walkway upon which animals may stand as they pass through the chamber 102.

A pair of moulded plastic trough support sections 130 are locatable on either side of the trough section 102 within the chamber 102 to retain the trough section 120 in place within the chamber 102. Recesses 132 are formed in an outer face of each trough support section 130 to provide space within the bottom of the chamber 102 to define a liquid collection sump 134, as will be described below in more detail.

As best illustrated in Figures 10 and 23, an arrangement of liquid supply conduits 136 is provided within the chamber 102, said liquid supply conduits 136 being mounted in guide recesses or channels 137,138 formed in the body of the chamber 102 and in the surface of the trough support sections 130, a plurality of spray nozzles or openings being formed in the liquid supply conduits in predetermined positions in the conduits 136, preferably in an upper region of the chamber 102. A pump 140 is mounted on the top of the chamber 102, within a pump housing, said pump being connected to the liquid supply conduits to pump a treatment fluid from the liquid collection sump 134 to the spray nozzles to spray the fluid onto animals located within the chamber 102. An electronic controller (not shown), preferably incorporating a timer, may be provided for controlling the operation of the pump 140. The pump 140, which is situated on the top of the chamber 102, will draw the treatment liquid up through a filter lifting pipe from the sump at the bottom of the chamber 102. The pump 140 then circulates the water around the pipes forcing it out of the spray nozzles at approx. 3-4 bar of pressure. Twenty five to thirty five spray nozzles may be provided, staggered along opposite pipes on either side of an upper region of the chamber, a distance of between 60cm and 80cm between each spray nozzle.

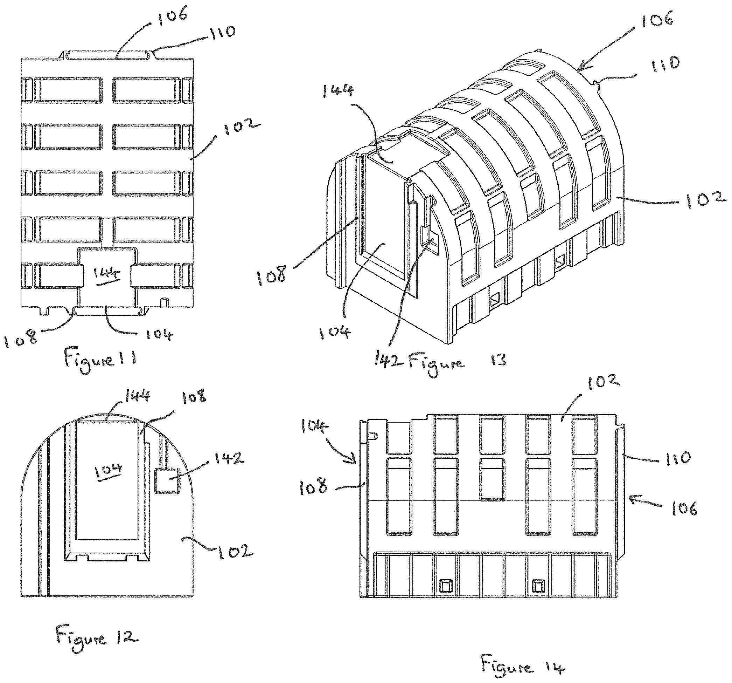

The pump 140 may also include dosing means for adding a predetermined concentration of treatment fluid to water to create said treatment liquid. As best shown in Figures 12 and 13, a recess 142 may be formed in an end wall of the chamber 102, adjacent a pump seat 144, for receiving the electronic controller.

Operation of the treatment apparatus of the invention is essentially the same as that of the first example of an apparatus shown in figures 1-9. In use, the gate 114 of the entrance opening 104 to the chamber 102 is raised and one or more animals are guided to walk into the chamber 102, into the trough 124 or onto a platform located thereon. Then the entrance gate 114 is closed and the pump 140 is activated, preferably for a predetermined period of time under the control of the timer of the controller, to spray treatment liquid through the nozzles via the liquids supply conduits 136 to drench said one or more animals within the chamber. The liquid impervious walls of the single piece chamber 102 prevent such liquid from escaping from the chamber 2, thus minimising any exposure of persons or animals outside of the chamber to the treatment liquid and avoiding wastage. The spraying of the animals with the treatment liquid via the spray nozzles is less stressful to the animals that being submerged in a treatment liquid. Once a treatment cycle has been completed, the gate 114 of the exit opening 110 may be raised to allow the animals to leave the chamber 102.

The invention is not limited to the embodiment(s) described herein but can be amended or modified without departing from the scope of the present claims.

## Claims

1. An animal treatment apparatus comprising a chamber (2) defining an enclosure within which one or more animals may be housed during treatment with a treatment liquid, a plurality of spray nozzles (26) being provided within the enclosure, said spray nozzles (26) communicating with a reservoir containing a treatment liquid, a pump (32) being provided for pumping said liquid from the reservoir to said spray nozzles (26) to drench the one or more animals located within said chamber (2) with said treatment liquid, wherein the chamber (2) comprises an entrance (8) at a first end of the chamber and an exit (10) at a second end of the chamber, opposite said entrance, such that the chamber (2) defines a tunnel like enclosure having a walkway (22) over which the at least one animal passes between said entrance and exit, wherein both the entrance (8) and the exit (10) are provided with a respective gate or door (14,16) for selectively closing the entrance or exit, **characterised in that** the chamber (2) includes a sump (25) within a lower region thereof for receiving treatment liquid drained from said walkway, said sump (25) comprising said treatment liquid reservoir, said spray nozzles (26) communicating with said pump (32) via conduits (28) mounted on an inner or outer surface of the chamber (2), wherein said pump (32) is mounted on exterior of chamber on a seat (144) integrally formed on an upper surface of the chamber (2), and wherein the chamber (2) is formed from a plastic such that the walls of the chamber are formed from a liquid impermeable material for retaining said treatment liquid within the chamber and comprises a single piece moulding formed by a rotational moulding process.

2. An apparatus as claimed in claim 1, wherein said gate or door (14,16) is mounted to be vertically slidable between open and closed positions.

3. An apparatus as claimed in claim 2, wherein each gate or door (14,16) is mounted within respective guide channels (19a,19b), said guide channels being integrally formed in the end walls of said chamber (2).

4. An apparatus as claimed in any preceding claim, wherein a trough (24) is provided in a lower region of the chamber defining a bath for treating the one more animal's feet.

5. An apparatus as claimed in claim 4, wherein the trough (24) is provided with a removable cover or platform (22) defining a portion of said walkway upon which animals may stand when inside the enclosure.

6. An apparatus as claimed in claim 4 or claim 5, wherein barriers (126,128) are provided on either side of the trough (24) to constrain animals to walk through the trough.

7. An apparatus as claimed in claim 6, wherein said barriers (126,128) and said trough (24) are formed from a single piece moulding formed of plastic located within the chamber (2).

8. An apparatus as claimed in any preceding claim, wherein said conduits (28) are located within slots or channels (30) formed in the inner or outer surface of the chamber.

## Patentansprüche

1. Tierbehandlungsvorrichtung umfassend eine Kammer (2), die ein Gehäuse definiert, innerhalb dessen ein oder mehrere Tiere während einer Behandlung mit einer Behandlungsflüssigkeit untergebracht werden können, eine Mehrzahl von Sprühdüsen (26), die innerhalb des Gehäuses bereitgestellt sind, wobei die Sprühdüsen (26) mit einem Reservoir kommunizieren, das eine Behandlungsflüssigkeit enthält, eine Pumpe (32), die zum Pumpen der Flüssigkeit vom Reservoir zu den Sprühdüsen (26) bereitgestellt ist, um das eine oder die mehreren innerhalb der Kammer (2) platzierten Tiere mit der Behandlungsflüssigkeit durchzunässen, wobei die Kammer (2) einen Eingang (8) an einem ersten Ende der Kammer und einen Ausgang (10) an einem zweiten Ende der Kammer gegenüber dem Eingang umfasst derart, dass die Kammer (2) ein tunnelartiges Gehäuse definiert mit einem Laufweg (22), über den das zumindest eine Tier zwischen dem Eingang und Ausgang passiert, wobei sowohl der Eingang (8) als auch der Ausgang (10) mit einem jeweiligen Gatter oder einer jeweiligen Tür (14, 16) zum selektiven Schließen des Eingangs oder Ausgangs ausgestattet sind, **dadurch gekennzeichnet, dass** die Kammer (2) ein Abflussbecken (25) innerhalb eines tiefer gelegenen Bereichs darin zum Aufnehmen der von dem Laufweg abgelaufenen Behandlungsflüssigkeit einschließt, wobei das Abflussbecken (25) das Behandlungsflüssigkeitsreservoir umfasst, wobei die Sprühdüsen (26) mit der Pumpe (32) über Leitungen (28) kommunizieren, die an einer inneren oder äußeren Oberfläche der Kammer (2) montiert sind, wobei die Pumpe (32) an der Außenseite der Kammer auf einem Sitz (144) montiert ist, der integral auf einer oberen Oberfläche der Kammer (2) geformt ist, und wobei die Kammer (2) aus einem Kunststoff geformt ist derart, dass die Wände der Kammer von einem für Flüssigkeiten undurchlässigen Material zum Zurückhalten der Behandlungsflüssigkeit innerhalb der Kammer geformt sind, und ein einzelnes gegossenes Stück umfasst, das durch einen Rotationsformprozess geformt ist.

2. Vorrichtung nach Anspruch 1, wobei das Gatter oder die Tür (14, 16) so montiert ist, dass es/sie vertikal zwischen offenen und geschlossenen Positionen verschoben werden kann.

3. Vorrichtung nach Anspruch 2, wobei jedes Gatter oder jede Tür (14, 16) innerhalb jeweiliger Führungskanäle (19a, 19b) montiert ist, wobei die Führungskanäle integral in den Endwänden der Kammer (2) geformt sind.

4. Vorrichtung nach einer der vorangehenden Ansprüche, wobei eine Senke (24) in einem unteren Bereich der Kammer bereitgestellt ist, die ein Bad zum Behandeln der Füße des einen oder der mehreren Tiere definiert.

5. Vorrichtung nach Anspruch 4, wobei die Senke (24) mit einer entfernbaren Abdeckung oder Plattform (22) ausgestattet ist, die einen Abschnitt des Laufwegs definiert, auf dem Tiere stehen können, wenn sie sich innerhalb des Gehäuses befinden.

6. Vorrichtung nach Anspruch 4 oder Anspruch 5, wobei Barrieren (126, 128) auf beiden Seiten der Senke (24) bereitgestellt sind, um die Tiere darauf einzuschränken, durch die Senke zu laufen.

7. Vorrichtung nach Anspruch 6, wobei die Barrieren (126, 128) und die Senke (24) aus einem einzelnen gegossenen Stück geformt sind, das aus Kunststoff geformt ist und innerhalb der Kammer (2) platziert ist.

8. Vorrichtung nach einem der vorangehenden Ansprüche, wobei die Leitungen (28) innerhalb von Schlitzen oder Kanälen (30) platziert sind, die in der inneren oder äußeren Oberfläche der Kammer geformt sind.

## Revendications

1. Appareil de traitement pour animaux comportant une chambre (2) définissant une enceinte à l'intérieur de laquelle un ou plusieurs animaux peuvent être logés pendant le traitement qui se fait au moyen d'un liquide de traitement, une pluralité de buses de pulvérisation (26) étant mises en œuvre à l'intérieur de l'enceinte, lesdites buses de pulvérisation (26) communiquant avec un réservoir contenant un liquide de traitement, une pompe (32) étant mise en œuvre pour pomper ledit liquide depuis le réservoir vers lesdites buses de pulvérisation (26) pour arroser lesdits un ou plusieurs animaux se trouvant à l'intérieur de ladite chambre (2) à l'aide dudit liquide de traitement, dans lequel la chambre (2) comporte une entrée (8) au niveau d'une première extrémité de la chambre et une sortie (10) au niveau d'une deuxième extrémité de la chambre, à l'opposé de ladite entrée, de telle sorte que la chambre (2) définit une enceinte en forme de tunnel ayant une passerelle (22) sur laquelle ledit au moins un animal passe entre ladite entrée et ladite sortie, dans lequel à la fois l'entrée (8) et la sortie (10) comportent un battant ou portillon respectif (14, 16) servant à fermer de manière sélective l'entrée ou la sortie, **caractérisé en ce que** la chambre (2) comprend un puisard (25) à l'intérieur d'une région inférieure de celle-ci servant à recevoir le liquide de traitement évacué en provenance de ladite passerelle, ledit puisard (25) comportant ledit réservoir de liquide de traitement, lesdites buses de pulvérisation (26) communiquant avec ladite pompe (32) par le biais de conduits (28) montés sur une surface intérieure ou extérieure de la chambre (2), dans lequel ladite pompe (32) est montée sur une partie extérieure de la chambre sur un siège (144) formé d'un seul tenant sur une surface supérieure de la chambre (2), et dans lequel la chambre (2) est formée à partir de plastique de telle sorte que les parois de la chambre sont formées à partir d'un matériau imperméable aux liquides à des fins de retenue dudit liquide de traitement à l'intérieur de la chambre et comporte un élément moulé d'une seule pièce formé par un processus de moulage par rotation.

2. Appareil selon la revendication 1, dans lequel ledit battant ou portillon (14, 16) est monté pour être coulissant à la verticale entre des positions ouverte et fermée.

3. Appareil selon la revendication 2, dans lequel chaque battant ou portillon (14, 16) est monté à l'intérieur de canaux de guidage respectifs (19a, 19b), lesdits canaux de guidage étant formés d'un seul tenant dans les parois d'extrémité de ladite chambre (2).

4. Appareil selon l'une quelconque des revendications précédentes, dans lequel une auge (24) est mise en œuvre dans une région inférieure de la chambre définissant un bain servant à des fins de traitement des pattes desdits un ou plusieurs animaux.

5. Appareil selon la revendication 4, dans lequel l'auge (24) comporte un capot ou plate-forme amovible (22) définissant une partie de ladite passerelle sur laquelle les animaux peuvent se tenir quand ils sont à l'intérieur de l'enceinte.

6. Appareil selon la revendication 4 ou la revendication 5, dans lequel des barrières (126, 128) sont mises en œuvre de chaque côté de l'auge (24) pour contraindre les animaux à marcher en passant par l'auge.

7. Appareil selon la revendication 6, dans lequel lesdites barrières (126, 128) et ladite auge (24) sont formées à partir d'un élément moulé d'une seule pièce formé en plastique se trouvant à l'intérieur de la chambre (2).

8. Appareil selon l'une quelconque des revendications précédentes, dans lequel lesdits conduits (28) se trouvent à l'intérieur des fentes ou canaux (30) formés dans la surface intérieure ou extérieure de la chambre.
